## Europäisches Patentamt
## European Patent Office
## Office européen des brevets

(19)

(11) Numéro de publication: **0 028 564**
**B1**

(12) **FASCICULE DE BREVET EUROPEEN**

(45) Date de publication du fascicule du brevet: **15.02.84**

(51) Int. Cl.³: **B 60 N 1/00**

(21) Numéro de dépôt: **80401529.5**

(22) Date de dépôt: **28.10.80**

(54) **Siège de véhicule présentant au moins une coque d'assise.**

(30) Priorité: **05.11.79 FR 7927263**

(43) Date de publication de la demande:
**13.05.81 Bulletin 81/19**

(45) Mention de la délivrance du brevet:
**15.02.84 Bulletin 84/7**

(84) Etats contractants désignés:
**BE DE GB IT NL SE**

(56) Documents cités:
**FR - A - 1 546 685**
**FR - A - 2 120 277**
**FR - A - 2 424 146**
**US - A - 3 330 597**
**US - A - 3 357 736**

(73) Titulaire: **SOCIETE INDUSTRIELLE BERTRAND FAURE**
**Brières les Scellés**
**F-91150 Etampes (FR)**

(72) Inventeur: **Boisset, Bernard**
**4, Clos de Montfaucon**
**F-91150 Etampes (FR)**

(74) Mandataire: **Behaghel, Pierre et al,**
**CABINET PLASSERAUD 84 rue d'Amsterdam**
**F-75009 Paris (FR)**

Courier Press, Leamington Spa, England.

Siège de véhicule présentant au moins une coque d'assise

L'invention est relative aux sièges de véhicules, notamment automobiles.

Elle se rapporte plus particulièrement au cas où les ossatures des sièges en question comprennent au moins une coque d'assise et au moins un tube métallique rigide s'étendant horizontalement et transversalement, c'est-à-dire selon la largeur du siège. Une telle ossature est décrite par exemple dans le brevet FR—A—2120277.

La coque en question est de préférence formée en une matière plastique moulée mais pourrait également être formée différemment, par exemple par une tôle emboutie en aluminium ou matériau analogue.

Le tube rigide transversal permet de conférer à la coque une certaine résistance à l'écrasement transversal.

Les sièges en question présentent un certain nombre d'advantages sur ceux à ossature discontinue en acier, en particulier en ce qui concerne la légèreté, l'inaltérabilité, le faible prix et la simplification de la construction et du montage des coussins du siège, vu la possibilité de donner directement aux coques qui supportent ces coussins une forme adaptée à l'anatomie d'une personne assise.

Mais dans les constructions connues de ces sièges, la fixation de la coque sur le reste de l'ossature métallique est difficile à réaliser avec solidité.

L'invention a pour but, surtout, de rendre les sièges du genre en question tels qu'ils répondent mieux que jusqu'à ce jour aux différentes exigences de la pratique, notamment en ce qui concerne la simplicité et la robustesse de la fixation de leur coque sur le reste de leur ossature.

A cet effet les sièges du genre en question selon l'invention sont caractérisés en ce que le tube métallique rigide horizontal transversal est monté sur la coque d'assise de manière à traverser jointivement un tunnel discontinu formé par une succession de lattes rigides de concavités alternées faisant partie de cette coque.

Dans des modes de réalisation préférés, on a recours en outre à l'une et/ou à l'autre des dispositions suivantes:

— le nombre des tubes rigides transversaux est de deux pour chaque coque d'assise, ces tubes étant disposés respectivement à l'avant et à l'arrière de l'assise,

— le nombre des lattes de coque longeant jointivement chaque tube est compris entre quatre et dix,

— la somme des largeurs des lattes inférieures est plus grande que la somme des largeurs des lattes supérieures.

L'invention comprend, mises à part ces dispositions principales, certaines autres dispositions qui s'utilisent de préférence en même temps et dont il sera plus explicitement question ci-après.

Dans ce qui suit l'on va décrire un mode de réalisation préféré de l'invention en se référant au dessin ci-annexé d'une manière bien entendu non limitative.

La figure 1, de ce dessin, montre en vue perspective, parties arrachées, un châssis de véhicule équipé de deux sièges conformes à l'invention.

La figure 2 est une coupe verticale longitudinale médiane d'un tel siège.

L'ossature considérée est une coque moulée 1 en une matière plastique telle qu'une résine polyester avantageusement armée de fibres de verre ou autre matériau.

Cette coque présente la forme générale d'un baquet adapté à recevoir une personne assise avec interposition de coussins appropriés 2.

Elle est traversée à sa base par deux tubes métalliques rigides 3, 4, l'un 3 disposé à l'avant du siège et l'autre 4 à l'arrière.

Le montage de chaque tube sur la coque est assuré par son logement jointif dans un tunnel discontinu 5 formé d'une succession de lattes ou sangles rigides 6 faisant partie de la coque elle-même et crevées en quelque sorte dans cette dernière de façon à longer alternativement la face inférieure et la face supérieure dudit tube.

En projection horizontale les différentes lattes 6 forment une succession de rectangles allongés longitudinalement et accolés transversalement côte à côte le long de fentes rectilignes longitudinales.

En projection transversale chaque latte se présente sous forme d'un U à ailes évasées extérieurement, U dont la zone médiane s'étend selon un arc de cercle.

L'amplitude de cet arc est ici un peu inférieure à 90° pour les lattes supèrieures et au contraire nettement supérieures à 90°, par exemple de l'ordre de 120 à 160 degrés, pour les lattes inférieures de sorte que ces dernières font davantage saillie sur la surface moyenne de la coque que les lattes supérieures:cette mesure permet d'éviter toute sensation de "point dur" ou plus précisément de "barre dure" au niveau des tubes, lorsque les coussins du siège sont peu épais.

Le tube avant 3 est avantageusement situé dans la zone, de la coque, correspondant à l'extrémité arrière des cuisses des personnes assises, zone où une portion arrière incurvée de cette coque se raccorde à un prolongement avant la généralement plan.

Bien entendu, les concavités des arcs considérés sont orientées alternativement vers le bas et vers le haut pour les lattes successives.

Ces lattes sont venues de moulage avec la coque 1 dont elles font partie intégrante:leurs extrémités avant et arrière sont raccordées tangentiellement avec le reste de cette coque en se fondant dans celle-ci.

La somme des largeurs des lattes inférieures est de préférence plus grande que la somme des largeurs des lattes supérieures de sorte que la solidité de l'accrochage de la coque sur chaque tube est plus élevée vers le haut que vers le bas:cette mesure permet de donner à la coque une excellente résistance à l'arrachement lors des chocs.

La coque ainsi renforcée par les tubes 3, 4 présente une résistance très élevée à l'écrasement transversal.

En effet, les lattes 6 qui longent chaque tube 3 ou 4 empêchent celui-ci de "flamber" lorsqu'il est soumis à un effort de compression axiale:la force transversale de maintien qu'il suffit en effet d'appliquer sur le tube pour éviter un tel flambage est relativement faible et les lattes 6 remplissent parfaitement ce rôle.

En plus dudit rôle de raidissement transversal, les tubes 3 et 4 en remplissent quelques autres.

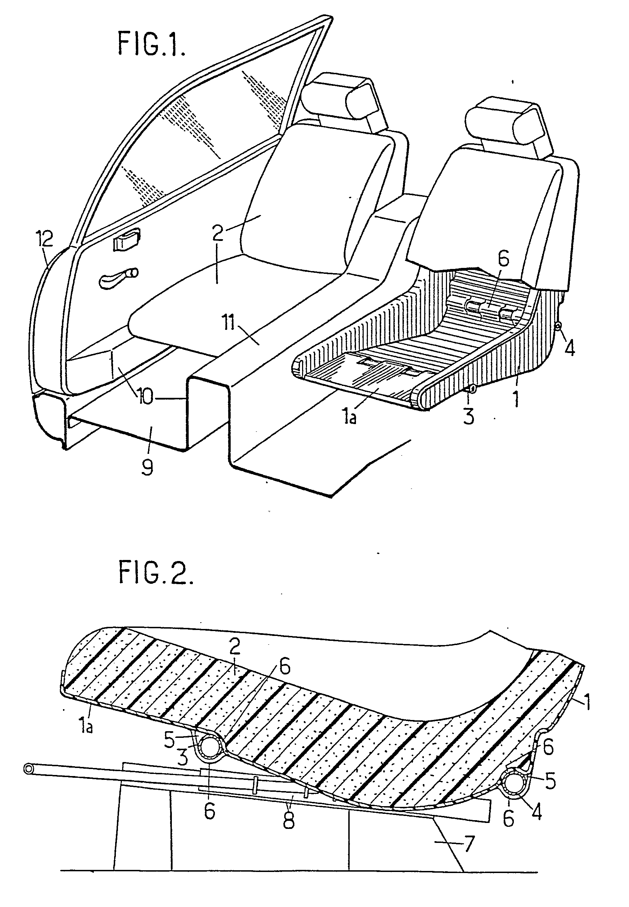

En particulier, du fait de l'accrochage solide et bien réparti de la coque 1 sur ces tubes il suffit d'assembler ces derniers à l'embase 7 (fig. 2) pour assurer la fixation de ladite coque sur cette embase.

A cet effet, l'on relie les extrémités desdits tubes à ladite embase 7 de toute manière désirable, notamment par l'intermédiaire de mécanismes (non représentés) permettant de régler individuellement ces tubes en hauteur et de glissières 8 permettant un réglage de l'ensemble du siège supporté en position longitudinale.

On peut également utiliser les tubes 3 et 4 pour transmettre d'un côté à l'autre du siège des couples de commande tels que ceux développés pour régler le hauteur et/ou l'inclinaison du siège, ou encore l'inclinaison de son dossier, ou même la raideur du soutien offert aux reins des personnes assises.

Pour effectuer cette transmission d'un côté à l'autre du dossier, on peut utiliser les tubes 3 et 4 eux-mêmes, alors montés de façon à pouvoir glisser en rotation dans leurs tunels 5, ou des tiges logées dans ces tubes, alors eux-mêmes fixes par rapport à la coque.

Les sièges ainsi raidis transversalement par les tubes 3 et 4 sont avantageusement utilisés en combinaison avec un châssis de véhicule prévu de façon telle que ces sièges contribuent par eux-mêmes à la raideur transversale dudit châssis.

A cet effet l'on fait comprendre audit châssis une auge 9 (fig. 1) délimitée latéralement par deux parois verticales longitudinales rigides 10 et propre à recevoir d'une manière quasi-jointive en direction transversale chaque coque raidie 1, éventuellement équipée de ses mécanismes latéraux de réglage, avec généralement interposition de plaques métalliques verticales longitudinales (non représentées), faisant notamment partie du support du siège et servant à répartir les charges de compression transversale.

De la sorte, en cas de compression transversale du châssis, chaque paroi 10 d'auge vient presque immédiatement au contact d'au moins une extrémité de l'un des tubes 3 et 4, de préférence avec interposition de l'une des plaques de répartition mentionnées ci-dessus, ce qui évite tout effet de "poinçonnement", et la résistance du tube en question au flambage empêche tout accroissement ultérieur de l'écrasement transversal ainsi amorcé.

Dans le cas préféré illustré où le véhicule comprend deux sièges côte à côte, le châssis comprend deux telles auges 9 côte à côte, réunies l'une à l'autre par un pontet central 11:ce pontet présente en section transversale la forme d'un U renversé dont les ailes verticales correspondent aux deux parois 10 parallèles, des deux auges, voisines du milieu du véhicule.

La paroi extérieure de chaque auge peut être liée en permanence au reste de celle-ci.

Sur la variante illustrée sur la figure 1, cette paroi extérieure fait partie d'une portière 12 du véhicule, laquelle peut être considérée comme une partie intégrante du châssis en sa position fermée.

En suite de quoi, et quel que soit le mode de réalisation adopté, on dispose finalement de sièges à coques raidies transversalement dont la constitution et les avantages résultent suffisamment de ce qui précède.

## Revendications

1. Siège de véhicule dont l'ossature comprend au moins une coque d'assise (1) et au moins un tube métallique rigide (3, 4) s'étendant horizontalement et transversalement, c'est-à-dire selon la largeur du siège, caractérisé en ce que ledit tube est monté sur ladite coque de manière à traverser jointivement un tunnel discontinu (5) formé par une succession de lattes rigides (6) de concavités alternées faisant partie de cette coque.

2. Siège de véhicule selon la revendication 1, caractérisé en ce que le nombre des tubes transversaux (3,4) est de deux pour chaque coque, ces tubes étant disposés respectivement à l'avant et à l'arrière de l'assise.

3. Siège de véhicule selon l'une quelconque des revendications 1 et 2, caractérisé en ce que le nombre de lattes (6) de coque longeant jointivement chaque tube est compris entre quatre et dix.

4. Siège de véhicule selon l'une quelconque des revendications précédentes, caractérisé en ce que la somme des largeurs des lattes inférieures est plus grande que la somme des largeurs des lattes supérieures.

## Patentansprüche

1. Fahrzeugsitz, dessen Gestell aus wenigstens einer Sitzschale (1) und wenigstens einem starren Metallrohr (3, 4) besteht, das sich in waagerechter Richtung und quer, d.h. über die Breite des Sitzes, erstreckt, dadurch gekennzeichnet, daß das Rohr zur Befestigung an der Schale dicht durch einen unterbrochenen Tunnel (5) geführt ist, der aus einer Reihe von starren Leisten (6) mit abwechselnder Konkavität gebildet wird, die einen Teil der Sitzschale bilden.

2. Fahrzeugsitz nach Anspruch 1, dadurch gekennzeichnet, daß die Sitzschale (1) zwei in Querrichtung verlaufende Rohre (3, 4) enthält, von denen das eine im Bereich des vorderen und das andere am hinteren Ende des Sitzes angeordnet ist.

3. Fahrzeugsitz nach den Ansprüchen 1 und 2, dadurch gekennzeichnet, daß der unterbrochene Tunnel (5) aus vier bis zehn Leisten (6) besteht, die dicht an jedem der Rohre (3, 4) anliegen.

4. Fahrzeugsitz nach den Ansprüchen 1 bis 3, dadurch gekennzeichnet, daß die Summe der Breiten der unten liegenden Leisten größer ist als die Summe der Breiten der oben liegenden Leisten.

**Claims**

1. A vehicle seat whose framework comprises at least one sitting shell (1) and at least one rigid metal tube (3, 4) extending horizontally and transversely, i.e. along the width of the seat, characterized in that said tube is mounted on said shell so as to pass jointingly through a discontinuous tunnel (5) formed by a succession of rigid laths (6) having alternate concavities forming part of said shell.

2. The vehicle seat according to claim 1, characterized in that the number of transverse tubes (3, 4) is two for each shell, these tubes being disposed respectively in front and behind the sitting portion.

3. The vehicle seat according to any one of claims 1 and 2, characterized in that the number of shell laths (6) passing jointingly along each tube is between four and ten.

4. The vehicle seat according to any one of the preceding claims, characterized in that the sum of the widths of the lower laths is greater than the sum of the widths of the upper laths.

FIG.1.

FIG.2.